# EUROPÄISCHE PATENTSCHRIFT

(11) **EP 0 621 765 B1**
(45) Veröffentlichungstag und Bekanntmachung des Hinweises auf die Patenterteilung: **20.09.1995**
(21) Anmeldenummer: 93901635.8
(22) Anmeldetag: 14.01.1993
(51) Int. Cl.: A61C 19/00, G02B 6/16, G02B 6/255

(54) **VORRICHTUNG ZUR ERHÖHUNG DER LICHTINTENSITÄT AM ENDE VON LICHTWELLENLEITERN**
DEVICE FOR INCREASING THE LIGHT INTENSITY AT THE END OF LIGHT WAVEGUIDES
INTENSIFICATEUR DE LA LUMIERE A L'EXTREMITE DE GUIDES D'ONDES LUMINEUSES

(30) Priorität: 15.01.1992 DE 4200887
(43) Veröffentlichungstag der Anmeldung: 02.11.1994
(73) Patentinhaber: Ceram Optec GmbH, D-53121 Bonn (DE)
(72) Erfinder: HERING, Peter, D-8046 Garching (DE); HAISCH, Michael, D-8000 München 21 (DE)
(74) Vertreter: Hanke, Hilmar
(86) Internationale Anmeldenummer: DE9300022
(87) Internationale Veröffentlichungsnummer: WO9313729

(56) Entgegenhaltungen:
- EP-A- 0 365 724
- US-A- 3 801 181
- US-A- 4 846 546
- PATENT ABSTRACTS OF JAPAN vol. 7, no. 234 (P-230)(1379) 18. Oktober 1983 ; & JP-A-58 122 504

## Beschreibung

Die Erfindung betrifft eine Lichtwellenleiter-Vorrichtung zur Erhöhung der Lichtintensität am Ende von Lichtwellenleitern gemäß DE-A-3644839.

Um die Lichtintensität am Ende von Lichtwellenleitern zu erhöhen, ist es bekannt, verschiedene Optiken an das Ende des Lichtwellenleiters zu setzen oder getaperte (trichterförmige) Lichtwellenleiter zu verwenden. Die Verwendung von zusätzlichen optischen Einrichtungen sowie die Fertigung getaperter Lichtwellenleiter ist sehr aufwendig. Dementsprechend teuer sind solche Lichtwellenleiter. Außerdem lassen sich nicht aus allen Materialien getaperte Lichtwellenleiter herstellen.

Aufgabe der Erfindung ist die Schaffung einer Vorrichtung der eingangs genannten Art, bei der mit Hilfe einfacher Mittel die Lichtintensität am Ende von Lichtwellenleitern erhöht werden kann.

Gelöst wird die der Erfindung zugrundeliegende Aufgabe durch eine Vorrichtung der im Patentanspruch 1 gekennzeichneten Art.

Vorteilhaft weitergebildet wird der Erfindungsgegenstand durch die Merkmale der Unteransprüche 2 bis 9.

Wesen der Erfindung ist ein gebogenes Lichtleiterstück am Ende des Lichtwellenleiters. Fließt Licht durch das gebogene Lichtleiterstück, bildet sich an der dem Krümmungsmittelpunkt abgewandten Seite ein Intensitätsmaximum.

Wesentlich für die Erhöhung der Intensität ist, daß der Brechungsindex zumindest des Kerns des gebogenen Lichtleiterstücks homogen ist. Dies bedeutet, daß im Lichtleiterstück keine Materialspannungen auftreten dürfen. Es genügt daher nicht, einen flexiblen Lichtwellenleiter durch eine geeignete Vorrichtung zu biegen.

Die Intensitätserhöhung tritt nur unmittelbar hinter dem Bogen auf. Befindet sich hinter dem Bogen noch ein Stück eines geraden Lichtwellenleiters, kann sie nicht ausgenutzt werden.

Das Bogenstück erhält man, indem man z.B. einen einstückigen Lichtwellenleiter am Ende so biegt, daß der Brechungsindex im Bogen homogen bleibt. Bei thermoplastischen Materialien kann dies durch Erwärmen des Materials erreicht werden.

Alternativ dazu kann man den Bogen auch an einen anderen Lichtwellenleiter ankoppeln. Als gebogenes Lichtleiterstück eignet sich z.B. ein Glasstab, der in einer Flamme gebogen und anschließend noch getempert wird. Für den UV- und den IR-Bereich können auch andere Materialien verwendet werden, die sich unter Wärmeeinwirkung oder auf eine andere Weise biegen lassen, ohne daß Spannungen auftreten, die den Brechungsindex ändern.

Das Material kann auch bereits in Bogenform hergestellt, z.B. gegossen werden.

Weiterhin können Lichtleiterstücke mit flüssigem Kern eingesetzt werden. Falls das Lichtleiterstück am Ende abgeschlossen werden soll, muß der Abschluß sehr kurz sein, da die Intensitätserhöhung nur unmittelbar am Ende des gekrümmten Abschnitts auftritt.

Hohle Lichtleiterstücke, in denen das Licht durch metallische oder dielektrische Reflexion geleitet wird, sind ebenfalls geeignet.

Der Bogenwinkel beträgt vorzugsweise mehr als etwa 45 bis 60 Grad. Insbesondere ist ein Bogenwinkel von exakt 90 Grad vorgesehen. Ein derartiger Lichtwellenleiter ist z.B. in der Zahnmedizin bei der Behandlung von Zähnen von Vorteil.

Der Krümmungsradius des gebogenen Lichtleiterstücks sollte möglichst klein sein. Da die Biegeverluste bei kleinen Biegeradien stark einsteigen, ist es zweckmäßig, die numerische Apertur des gebogenen Lichtleiterstücks größer als die des vorhergehenden Lichtleiters zu wählen.

Verwendet man einen gebogenen Glas- oder Quarzstab, erhält man eine relativ hohe numerische Apertur, wenn der Stab nur von Luft oder von Wasser umgeben ist. Alternativ dazu kann man den Stab auch verspiegeln.

Zwar kennt man nach dem Stand der Technik Lichtleiteranordnungen, die im Bereich ihres Endes einen Bogen aufweisen (z.B. aus DE-PS 30 09 171, DE-OS 28 08 045, DE-OS 29 07 249). Der Bogen ist jedoch nicht zur Intensitätserhöhung des Lichtes eingesetzt, sondern nur, um schwer zugängliche Stellen zu erreichen. Die bekannten Lichtwellenleiter endigen nicht unmittelbar nach dem Bogen, sondern besitzen in der Regel noch ein geradliniges Stück. Dementsprechend wird bekanntermaßen nicht gefordert, daß der Brechungsindex im gebogenen Lichtleiterstück homogen ist, noch daß der gebogene Lichtleiter unmittelbar nach dem Bogen endet.

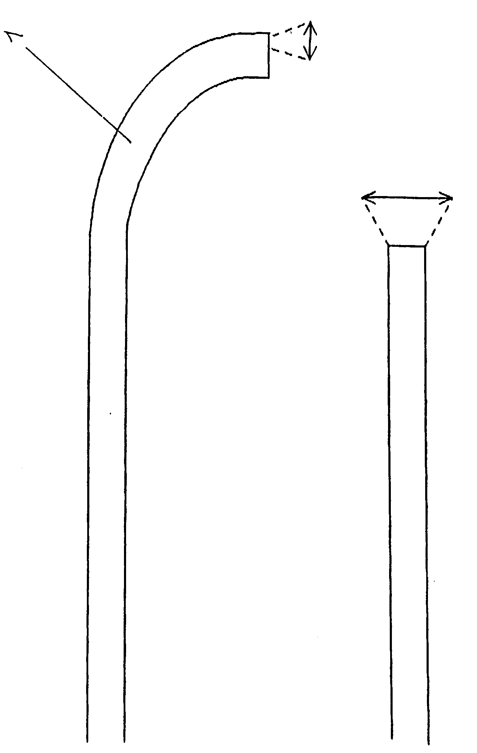

Die Erfindung wird nachfolgend anhand eines Ausführungsbeispiels unter Bezugnahme auf die aus einer einzigen Figur bestehenden Zeichnung näher erläutert, die schematisch einen endseitig gebogenen Lichtwellenleiter (oben) im Vergleich zu einem bekannten geradlinigen Lichtwellenleiter (unten) zeigt.

Der oben in der Zeichnung dargestellte endseitig gebogene Lichtwellenleiter, der auch als fokussierender Lichtleiter bezeichnet wird, ist ein endseitig gebogener Glasstab aus Vollmaterial, der in einer Flamme gebogen und anschließend getempert worden ist. Er besitzt zumindest im Kern des gebogenen Lichtleiterstücks einen homogenen Brechungsindex. Der Lichtwellenleiter endigt unmittelbar nach dem Bogen. Der Bogenwinkel beträgt 90 Grad.

Fließt Licht durch das gebogene Lichtleiterstück 1, bildet sich an der dem Krümmungspunkt abgewandten Seite ein Intensitätsmaximum, welches in der Zeichnung gestrichelt dargestellt ist. Demgegenüber emittiert das Licht beim bekannten geradlinigen Lichtwellenleiter in Richtung der geradlinigen Lichtleiterachse. Um eine Erhöhung der Lichtintensität am Ende des bekannten Lichtwellenleiters zu erreichen, ist es erforderlich, zusätzliches optisches Gerät einzusetzen oder den Lichtwellenleiter mit einer Taperung zu versehen.

Die Lichtintensitätserhöhung am Ende des fokussierenden Lichtleiters kann z.B. nach dem Ray-Tracing-Verfahren berechnet werden.

In einem Versuch wurde an einigen gebogenen Glasstäben mit einer CCD-Kamera das Intensitätsprofil aufgenommen. Dabei wurde festgestellt, daß die gesamte Lichtenergie nur durch etwa ein Viertel des Lichtwellenleiterquerschnitts fließt.

Entsprechend tritt am Ende des Bogens an der dem Krümmungsmittelpunkt abgewandten Seite eine Erhöhung der Lichtintensität auf.

## Patentansprüche

1. Lichtwellenleiter-Vorrichtung zur Erhöhung der Lichtintensität am Ende von Lichtwellenleitern,
dadurch gekennzeichnet,
daß ein gebogenes Lichtleiterstück (1) mit einem möglichst kleinen Krümungsradius unmittelbar hinter dem Bogen endet, wobei der Brechungsindex zumindest des lichtleitenden Kernbereichs des gebogenen Lichtleiterstücks (1) homogen und materialspannungsfrei ist, und einstückig mit dem vorhergehenden Lichtleiter ausgebildet oder als separater Bogen an einen vorangegangenen Lichtleiter angesetzt ist.

2. Vorrichtung nach Anspruch 1,
dadurch gekennzeichnet,
daß der Bogenwinkel des gebogenen Lichtleiterstücks (1) mehr als etwa 45 bis 60 Grad, vorzugsweise exakt 90 Grad, beträgt.

3. Vorrichtung nach Anspruch 1 oder 2,
dadurch gekennzeichnet,
daß die numerische Apertur des gebogenen Lichtleiterstücks (1) gleich oder größer ist als die des vorhergehenden Lichtleiters.

4. Vorrichtung nach einem der Ansprüche 1 bis 3,
dadurch gekennzeichnet,
daß ein unter Wärmeeinwirkung gebogenes Lichtleiterstück (1) aus thermoplastischem Material vorgesehen ist.

5. Vorrichtung nach einem der Ansprüche 1 bis 4,
dadurch gekennzeichnet,
daß das Material des Lichtleiterstücks (1) bereits in Bogenform vorgefertigt, insbesondere vorgegossen ist.

6. Vorrichtung nach Anspruch 4 oder 5,
dadurch gekennzeichnet,
daß das gebogene Lichtleiterstück (1) getempert ist.

7. Vorrichtung nach einem der Ansprüche 1 bis 6,
dadurch gekennzeichnet,
daß das gebogene Lichtleiterstück (1) ein Glas- oder Quarzstab ist, der von Luft oder Wasser umgeben oder verspiegelt ist.

8. Vorrichtung nach einem der Ansprüche 1 bis 3,
dadurch gekennzeichnet,
daß ein hohles gebogenes Lichtleiterstück mit metallischer oder dielektrischer Lichtreflexion vorgesehen ist.

9. Vorrichtung nach einem der Ansprüche 1 bis 3,
dadurch gekennzeichnet,
daß ein hohles gebogenes Lichtleiterstück mit einem flüssigen Kern und einem endseitigen dünnwandigen Abschluß vorgesehen ist.

## Claims

1. Lightguide device aimed at increasing the light intensity at the output of optical fibres (lightguides) and characterized by the fact that a lightguide endpiece (1) terminates itself with the smallest bending radius possible immediately after the bending,
where the refractive index of at least the light guiding core section of the bent guide (1) is homogeneous and free of materials tensions and where this device is either integral part of the main lightguide or as separate bent part attached to the preceding guide.

2. Device according to claim 1 whereby the bending angle of the bent lightguide piece (1) is more than 45 to 60° and preferably exactly 90°.

3. Device according to claim 1 or 2 whereby the numerical aperture of the bent lightguide piece (1) is identical or larger than the one of the preceding lightguide.

4. Device according to claims 1 to 3 whereby the bent lightguide (1) piece is foreseen as made from a thermoplastic material bent under the influence of heat.

5. Device according to claims 1 to 4 whereby the constitutive material of the bent lightguide piece (1) is already prefabricated in bent shape and particularly moulded.

6. Device according to claim 4 or 5 whereby the bent lightguide piece (1) is annealed.

7. Device according to claims 1 to 6 whereby the bent lightguide piece (1) is a glass or silica (quartz) rod, surrounded by air or water or mirror coated.

8. Device according to claims 1 to 3 whereby the bent lightguide piece (1) is hollow and designed (so as to achieve) metallic or dielectric light reflection.

9. Device according to claims 1 to 3 whereby the bent lightguide piece (1) is foreseen hollow with a liquid core and a thin closing device at one end.

## Revendications

1. Dispositif guide de lumière ayant pour but d'augmenté l'intensité de lumière en sortie de fibres optiques (guides de lumière) et qui se caractérise par le fait qu'un embout guide de lumière courbé (1) se termine avec le rayon de courbure le plus petit possible immédiatement après la courbure,
ou l'indice de réfraction d'au moins la section guidant la lumière de l'embout guide de lumière est homogène et libre de tensions de matériau et est soit partie intégrante du guide de lumière principal soit une pièce courbée séparée rapportée sur le guide de lumière le précédant.

2. Dispositif suivant la revendication 1 caractérisé par le fait que l'angle de courbure de l'embout guide de lumière courbé (1) est supérieur à 45 et 60° et préferablement 90°.

3. Dispositif suivant la revendication 1 ou 2 caractérisé par le fait que l'ouverture numérique de l'embout guide de lumière courbé (1) est identique on supérieure à celle du guide de lumière le précédant.

4. Dispositif suivant revendications 1 à 3 caractérisé par le fait que l'embout guide de lumière courbé est prévu comme étant fabriqué à partir d'un matériau thermoplastique courbé sous l'influence de la chaleur.

5. Dispositif suivant revendications 1 à 4 caractérisé par le fait que le matériau constitutif de l'embout guide de lumière courbé (1) est déjà préfabriqué sous une forme courbée et particulièrement moulé.

6. Dispositif suivant revendication 4 ou 5 caractérisé par le fait que l'embout guide de lumière courbé (1) est recuit.

7. Dispositif suivant revendications 1 à 6 caractérisé par le fait que l'embout guide de lumière courbé (1) est constitué d'un barreau de verre ou de silice (quartz) ceint d'air ou d'eau ou avec traitement de surface refléchissant.

8. Dispositif suivant revendications 1 à 3 caractérisé par le fait que l'embout guide de lumière courbé (1) est creux est conçu pour obtenir une réflexion de la lumière métallique ou diélectrique.

9. Dispositif suivant revendications 1 à 3 caractérisé par le fait que l'embout guide de lumière courbé (1) est prévu avec un coeur liquide et un dispositif de fermeture fin à une des extrémités.
